# EUROPÄISCHE PATENTANMELDUNG

(11) **EP 1 467 195 A1**
(43) Veröffentlichungstag der Anmeldung: **13.10.2004**
(21) Anmeldenummer: 04006762.1
(22) Anmeldetag: 20.03.2004
(51) Int. Cl.: G01N 1/22

(54) **Sonde zur Entnahme einer Gasprobe**

(30) Priorität: 07.04.2003 DE 10315996
(71) Anmelder: Sobotta GmbH Sondermaschinenbau, D-53819 Neunkirchen-Seelscheid (DE)
(72) Erfinder: Sobotta, Bernhard, 53804 Much (DE); Schäfer, Peter, 66879 Steinwalden (DE)
(74) Vertreter: Radünz, Ingo, Dipl.-Ing.

(57) **Zusammenfassung**

Eine Sonde zur Entnahme einer Gasprobe aus einem heißen Reaktionsraum besteht aus einer Gasentnahmesonde (1) mit einem Gasentnahmerohr (3), das von einem Außenmantel (2) umgeben ist, der einen von Kühlwasser durchströmten Ringraum (12) begrenzt. Zwischen dem Gasentnahmerohr (3) und einem das Gasentnahmerohr (3) konzentrisch umgebenden Hüllrohr (11) ist ein evakuierter Hohlraum (17) ausgebildet. (Zeichnung)

## Beschreibung

Die Erfindung betrifft eine Sonde zur Entnahme einer Gasprobe aus einem heißen Reaktionsraum mit den Merkmalen des Oberbegriffes des Anspruches 1.

Derartige Sonden dienen dazu, in Feuerräumen von Kraftwerken, Müllverbrennungsanlagen, Zementfabriken und ähnlichen Anlagen den nach der Verbrennung noch vorhandenen Sauerstoff und entstandene Schadgase in ihren Anteilen zu bestimmen. Solche Messungen sind aus Effizienz- und Umweltbedingungen erforderlich

Es sind verschiedene Gasentnahmesondentypen verfügbar, die die Aufgabe haben, die Abgase aus Abgaskanälen von Verbrennungsraümen bei etwa 900°C durch Unterdruck anzusaugen. Die angesaugten Abgase werden konditioniert und einem Analysensystem zugeführt. Es ist von besonderer Bedeutung, das Messgas möglichst mit 150°C bis 200°C durch das Rohrsystem der Entnahmesonde zu bringen, damit eine Kondensatbildung von Rauchgasbestandteilen, wie z. B. SO₃-Aerosole bzw. H₂SO₄, in den Rohrleitungen vermieden wird.

Die Gefahr einer Kondensation besteht, weil alle Sondensysteme zum Schutz gegen thermische Belastung gekühlt werden müssen, was mit Hilfe von Wasser oder Öl als Kühlmedium geschieht. Bei einer Ölkühlung kann die Sondentemperatur zwar 150°C betragen, jedoch birgt dieses brennbare Kühlmedium erhebliche Gefahren. Bei undichter Sonde fließt Öl in den Feuerraum und verursacht eine unkontrollierte Verbrennung bzw. Verpuffung. Dies stellt ein schwer zu beherrschendes Gefahrenpotential dar.

Die Temperatur des Kühlwassers kann maximal 90°C betragen. Bei einer Wasserkühlung muss daher, durch Heizenergiezuführung das Gasentnahmerohr auf etwa 150°C bis 200°C aufgeheizt werden. Das kann mittels einer Heizwicklung erfolgen, die sich im Kühlwasser befindet. Hierbei ist die Heizwicklung ein möglicher Störfaktor, da die Wicklungen häufig Körperschluss bekommen oder brechen können.

Es ist bereits eine wassergekühlte Gasentnahmesonde bekannt (EP 0 243 569 A1), bei der das Entnahmerohr von einer elektrischen Widerstandsheizung umgeben ist. Die Widerstandsheizung ist in eine aus Mineralstoffen bestehende Isolierschicht eingebettet, die zwischen dem Entnahmerohr und dem Kühlmantel angeordnet ist. Diese Widerstandsheizung sorgt für eine Erwärmung des Entnahmerohres, wodurch eine Taupunktsunterschreitung der Gasproben verhindert werden soll.

Aus dem japanischen Patent 09-145563 ist eine ungekühlte Gasentnahmesonde für die Entnahme einer Gasprobe aus dem Abgas eines Dieselmotors bekannt. Die bekannte Gasentnahmesonde besteht aus einem inneren Rohr, das von einem äußeren, mit der Außenluft in Kontakt stehenden Rohr umgeben ist, wobei zwischen beiden Rohren eine Vakuumschicht vorhanden ist. Die Innenseite des inneren Rohres und die Außenseite des äußeren Rohres sind hochglanzpoliert. Weiterhin ist das äußere Rohr von einem Ringkanal umgeben, der von Luft zur Verdünnung der Gasprobe durchströmt ist. Die Isolierwirkung der Vakuumschicht soll eine Ablagerung von Feststoffpartikeln auf der Innenseite des inneren Rohres verhindern.

Der Erfindung liegt die Aufgabe zugrunde, bei einer wassergekühlten Sonde der gattungsmäßigen Art ohne Energiezufuhr die Temperatur oberhalb des Taupunktes der Gasprobe zu halten.

Der von Kühlwasser durchströmte Außenmantel sorgt für eine Kühlung der innerhalb des heißen Reaktionsraumes angeordneten Sonde. Gleichzeitig verhindert der evakuierte Hohlraum zwischen dem Außenmantel und dem Entnahmerohr, dass eine Wärmeübertragung durch Wärmeleitung von der angesaugten Gasprobe auf das Kühlwasser erfolgen kann. Auch tritt innerhalb des evakuierten Hohlraumes keine Wärmeübertragung durch Konvektion auf. Es bleibt nur ein geringer Teil an Wärmestrahlung übrig, der eine gewisse Kühlung der Gasprobe durch das Kühlwasser bewirkt. Auf diese Weise gelingt, dass sich die angesaugte Gasprobe innerhalb der wassergekühlten Sonde von einer Ausgangstemperatur von 900°C auf nicht weniger als auf 150°C bis 200°C abgekühlt. Die Gefahr einer Unterschreitung des Taupunktes innerhalb des Entnahmerohres der Sonde ist damit ausgeschlossen.

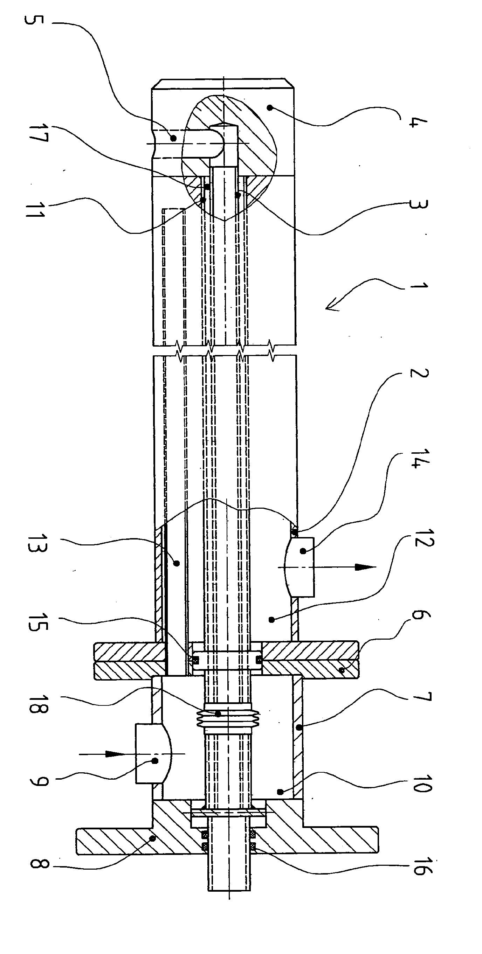

Ein Ausführungsbeispiel der Erfindung ist in der Zeichnung dargestellt und wird im Folgenden näher erläutert. Die Zeichnung zeigt einen Längsschnitt durch eine Gasentnahmesonde.

Die dargestellte Gasentnahmesonde 1 ragt in einen heißen Reaktionsraum, z. B. in den Abgasraum eines Feuerraumes eines Dampferzeugers, einer Müllverbrennungsanlage, eines Zementbrennofens oder einer ähnlichen Feuerungsanlage hinein. Die Gasentnahmesonde 1 besteht aus einem Außenmantel 2, der mit Abstand ein Gasentnahmerohr 3 umschließt. An ihrer Spitze trägt die Gasentnahmesonde einen massiven Ansaugtubus 4. Der Ansaugtubus 4 ist mit einer radial angeordneten Ansaugöffnung 5 versehen, die mit dem Gasentnahmerohr 3 in Verbindung steht. Das Gasentnahmerohr 3 ragt aus dem hinteren Ende der Gasentnahmesonde heraus und ist mit einem nicht gezeigten Analysegerät verbunden. Ein Probestrom des zu analysierenden Abgases wird mittels Unterdruck durch die Ansaugöffnung 5 angesaugt, tritt in den Ansaugtubus 4 ein und wird durch das Gasentnahmerohr 3 zu dem Analysegerät geleitet.

An dem hinteren Ende des Außenmantels 2 ist ein Flansch 6 angebracht. Mit dem Flansch 6 ist ein Kühlwassermantel 7 verbunden, der an einen Abschlussflansch 8 angeschlossen ist. An dem Kühlwassermantel 7 ist ein Anschlussstutzen 9 für den Zulauf von Kühlwasser angebracht. Der Flansch 6, der Kühlwassermantel 7 und der Abschlussflansch 8 umschließen eine Kühlwassereinrittskammer 10.

Innerhalb des Außenmantels 2 ist konzentrisch zum Außenmantel 2 ein Hüllrohr 11 angeordnet. Das Hüllrohr 11 umgibt in einem radialen Abstand das Gasentnahmerohr 3. Das Hüllrohr 11, das Gasentnahmerohr 3, und der Außenmantel 2 sind gas- und flüssigkeitsdicht mit dem Ansaugtubus 4 verschweißt. Zwischen dem Außenmantel 2 und dem Hüllrohr 11, die mit radialem Abstand voneinander angeordnet sind, ist ein Ringraum 12 gebildet, der an dem einen Ende durch den Ansaugtubus 4 und an dem anderen Ende durch den Flansch 6 flüssigkeitsdicht abgeschlossen ist. Innerhalb des Ringraumes 12 ist in axialer Richtung ein beidseitig offenes Kühlwasservorlaufrohr 13 angeordnet, das bis nahe an den Ansaugtubus 4 reicht. Das hintere Ende des Kühlwasservorlaufröhres 13 ist durch den Flansch 6 hindurchgeführt und zur Kühlwassereintrittskammer 10 hin offen. An dem Außenmantel 2 ist nahe dem Flansch 6 ein Anschlussstutzen 14 für den Abfluss des Kühlwassers angebracht. An den Stellen, an denen das Hüllrohr 11 durch den Flansch 6 und den Abschlussflansch 8 hindurchgeführt sind, sind Dichtungen 15, 16 vorgesehen, um einen unerwünschten Durch- oder Austritt des Kühlwassers zu verhindern. Das durch den Anschlussstutzen 9 zugeführte Kühlwasser strömt durch das Kühlwasservorlaufrohr 13 bis nahe an den Ansaugtubus 4, verteilt sich über den gesamten Ringraum 12 und fließt unter Kühlung des Außenmantels 2 über den Anschlussstutzen 14 ab.

An dem dem Ansaugtubus 4 abgewandten Ende sind das Hüllrohr 11 und das Gasentnahmerohr 3 gasdicht miteinander verbunden, so dass zwischen dem Hüllrohr 11 und dem Gasentnahmerohr 3 ein geschlossener, ringförmiger Hohlraum 17 gebildet ist, der am vorderen Ende durch den Ansaugtubus 4 begrenzt ist. Der Hohlraum 17 ist mit einem Druck von etwa 0,1 bis 0,6 bar evakuiert, wobei vorzugsweise ein Druck von etwa 0,3 bar absolut eingestellt wird. Durch den evakuierten Hohlraum 17 wird in Verbindung mit dem von Kühlwasser durchströmten Ringraum 12 erreicht, dass einerseits die Gasentnahmesonde zum Schutz gegen thermische Belastung ausreichend gekühlt wird. Andererseits wird aber die Wärmeübertragung zwischen dem angesaugten Gasstrom und dem Kühlwasser soweit reduziert wird, dass der durch das Gasentnahmerohr 3 strömende Gasstrom bei einer Eintrittstemperatur von 900°C mit einer Temperatur von 150°C bis 200°C noch oberhalb des Taupunktes aus dem Gasentnahmerohr 3 austritt. Ohne den evakuierten Hohlraum 17 hätte das Gas an dieser Stelle eine Temperatur von 60 bis 80 °C.

Zu einer guten Isolationswirkung empfiehlt sich eine bestimmte Breite des evakuierten ringförmigen Hohlraumes 17, in einem Bereich von 2 bis 8 mm, vorzugsweise in einer Größenordnung von etwa 5 mm.

Da das vergleichsweise warme, mit dem heißen Gasstrom in Berührung kommende Gasentnahmerohr 3 und das vergleichsweise kalte, mit dem Kühlwasser in Berührung kommende Hüllrohr 11 an beiden Enden fest miteinander verbunden sind, entstehen während des Betriebes aufgrund der unterschiedlichen Längendehnungen gewisse Spannungen. Um die thermisch bedingten Längendehnungen auszugleichen, ist in das Hüllrohr 11 ein Kompensator 18 eingebaut. Der Kompensator 18 ist in dem Teil des Hüllrohres 11 vorgesehen, der sich innerhalb der Kühlwassereintrittskammer 10 befindet.

## Patentansprüche

1. Sonde zur Entnahme einer Gasprobe aus einem heißen Reaktionsraum bestehend aus einer Gasentnahmesonde (1) mit einem Gasentnahmerohr (3), das von einem Außenmantel (2) umgeben ist, der einen von Kühlwasser durchströmten Ringraum (12) begrenzt, wobei zwischen dem Gasentnahmerohr (3) und dem Ringraum (12) eine Isolierschicht angeordnet ist, **dadurch gekennzeichnet, dass** die Isolierschicht als evakuierter Hohlraum (17) zwischen dem Gasentnahmerohr (3) und einem das Gasentnahmerohr (3) konzentrisch umgebenden Hüllrohr (11) ausgebildet ist.

2. Sonde nach Anspruch 1, **dadurch gekennzeichnet, dass** in dem evakuierten Hohlraum (17) ein Druck von etwa 0,1 bis 0,6 bar absolut eingehalten ist.

3. Sonde nach Anspruch 2, **dadurch gekennzeichnet, dass** in dem evakuierten Hohlraum (17) ein Druck von etwa 0,3 bar absolut eingehalten ist.

4. Sonde nach Anspruch 1 oder 2, **dadurch gekennzeichnet, dass** in das Hüllrohr (10) ein Kompensator (18) eingebaut ist.

5. Sonde nach Anspruch 2, **dadurch gekennzeichnet, dass** der evakuierte Hohlraum (17) eine Breite im Bereich von 2 bis 8 mm aufweist.

6. Sonde nach Anspruch 5, **dadurch gekennzeichnet, dass** der evakuierte Hohlraum (17) eine Breite von ungefähr 5 mm aufweist.
